# EUROPEAN PATENT APPLICATION

(11) **EP 1 356 925 A1**
(43) Date of publication of application: **29.10.2003**
(21) Application number: 02447073.4
(22) Date of filing: 25.04.2002
(51) Int. Cl.: B32B 27/32

(54) **Peelable packaging system and method for making same**

(71) Applicant: Amcor Flexibles Transpac, 1160 Auderghem (BE)
(72) Inventor: Malfait, Tony, 8880 Ledegem (BE); Daelmans, Eddy, 3650 Dilsem-Stokkem (BE)
(74) Representative: Van Malderen, Michel

(57) **Abstract**

The present invention is related to a peel-seal combination comprising a microporous layer adhering to a thermoplastic film comprising at least a peelable top layer and optionally a core and/or a bottom layer wherein said peelable top layer comprises 5-50%, preferably 10-30% of a peel force promoter, 50-95% of a polyolefin plastomer with a density between 0.86 and 0.91 g/cc and 0-30% of an alpha-polyolefin polymer selected from the group consisting of homogeneously and heterogeneously branched polyethylene types such as ULDPE, VLDPE, LDPE, LLDPE and MDPE.

## Description

### Field of the invention

The present invention is related to the field of peel-open sterile fill and seal packaging, and in particular to a peel seal combination for sterile medical packaging as well as a method for producing the same.

### State of the art

The use of microporous layers such as spunbonded polyolefins, also called synthetic paper, for medical and pharmaceutical packaging applications is known for many years.

Examples of such spunbonded polyolefins are known under the trade name Tyvek® from DuPont. This spunbonded polyolefin is a tough, durable web, produced by melt-spinning of interconnected HDPE fibre filaments which are extruded and spun in continuous strands, cutted and bonded together by means of pressure and heat to an opaque microporous and breathable non-woven material. This material is described in detail in the *Pharmaceutical & medical packaging news magazine of July, 1999.*

In particular for medical spunbonded polyolefin grades, the pores are large enough to allow permeation of a sterilising gas into the package, but sufficiently small to prevent the passage of bacteria into it.

A commonly used sterilisation gas is ethylene oxide (ETO). It kills the bacteria in the interior of the package and is applied after sealing of the spunbonded polyolefin with a thermoplastic film. The latter is hermetic and prevents the introduction of bacteria into the package.

For the packaging of various sorts of medical devices different types of packages containing spunbonded polyolefins are used: bags, trays, pouches, blisters. Principally all those packages should be easy opening which implies that a peelable interface has to be present between the sealed spunbonded polyolefin and the non-porous flexible film. Clearly after opening of the peel a homogeneous white or coloured peel trace should be visible, in order to recognise the tamper proof evidence of the peelable package.

In a direct contact heat sealing process sufficient adhesion between the thermoplastic film and the spunbonded polyolefin. This has to be generated without partial or fractional melting of the latter. Tyvek® for instance has a DSC melting point of 130°C. If the adhesion becomes too high, the peel force for opening the package will be higher than the internal cohesion of the spunbonded sheet. As a result fibre lifting, or even delaminating, will occur. If on the other hand the adhesion is too low the package has a high risk of being unclosed and becomes unsterile.

In order to introduce a tamper proof evident peelable system with a clearly visible peel trace between the spunbonded polyolefin and the flexible film, there are currently two common approaches.

Microporous layers such as spunbonded polyolefin sheets, papers or microperforated films are available on the market with a peelable type of adhesive coating (glue) onto it. According to this approach the non-woven contains the peelable system and the flexible thermoplastic film is composed of a sealable top layer. Typical sealants are low and linear low density polyethylene (L(L)DPE), functionalized copolymers such e.g. ethylene vinyl acetate (EVA), ethylene methylacrylates (EMA), ethylene ethylacrylates (EEA), ethylene butylacrylates (EBA), in addition to polyethylene terephtalate glycol (PETG) in some cases.

The disadvantage of this approach is that the gauge variations of the nonwoven are translated into coating thickness variations. This not only implies a potential risk of unclosed packages but also forces the converter to apply high coating weights onto the spunbond polyolefin, in order to cover all unevenness of the substrate. The supplier has to guarantee that the complete surface is coated by the same surface weight (g/m²) and that a non-coated surface does not occur.

Furthermore, it is well known by those skilled in the art that fiber pickoff during peeling open of an adhesive coating, has always been a problem. During the opening of the package some of the nonsterile fibres can contaminate the packed product making it unusable.

Finally the seal window of such coated spunbonded polyolefins is as low as 7 or 8°C at a peel force of 1N/cm which allows few temperature and speed variations in the packaging process.

In a preferred alternative a peelable layer is built into a coextruded thermoplastic bottom layer and the spunbonded polyolefin is applied in its uncoated form. In this approach at least one converting step is eliminated and considerable cost savings are created. Moreover the thickness consistency of an extruded peelable film, compared to a coated layer, generates for the end-user a significant higher quality assurance.

The problem with the latter approach is to find adequate sealant materials that give sufficiently adhesion to the spunbond polyolefin. On the other hand the adhesion should be controlled in a way that during the opening of the spunbond polyolefin, no fibre release or delamination occurs. The document US 5,830,547 discloses high ethylene vinyl acetate and ethylene acrylic polymers as valuable polymers to produce such a peelable system where the very high peel forces of the functionalized ethylene copolymer at elevated temperatures (between 122-132°C) are lowered by a peelability additive and a seal separating additive (e.g. polybutene-1 and talcum).

The additives proposed in this document, do however not broaden the seal window of the flexible film sealed against uncoated spunbond polyolefin, such as Tyvek for example.

Moreover these systems have, unfortunately, only a limited operational window in terms of temperature and require relatively high seal initiation temperatures. Obviously the higher the sealing temperatures, the more risk is involved in getting fibre tear or delamination of the spunbond web (HDPE - DSC, 130°C).

Furthermore, high ethylene vinyl acetate polymers are quite unstable during film extrusion which results in undesired degradation residues.

### Aims of the invention

The present invention aims to provide a solution to overcome the problems described in the prior art avoiding the disadvantages of the approach based on a peelable coated spunbonded polyolefin.

Furthermore, the present invention aims to provide a packaging solution with lower seal initiation temperature, a broader seal window, higher peel forces and a more homogeneous white or coloured peel trace compared to the prior art based on a peelable thermoplastic film containing functionalized polyolefin copolymers.

### Summary of the invention

The present invention discloses a peel-seal combination comprising a microporous layer adhering to a thermoplastic film comprising at least a peelable top layer and optionally a core and/or a bottom layer characterised in that:
- said peelable top layer comprises 5-50%, preferably 10-30% of a peel force promoter,
- 50-95% of a polyolefin plastomer with a density between 0.86 and 0.91 g/cc, and
- 0-30% of an alpha-polyolefin polymer selected from the group consisting of homogeneously and heterogeneously branched polyethylene types such as ULDPE, VLDPE, LDPE, LLDPE and MDPE.

A surprising and unexpected primary advantage of the present invention is that said peel force promoter is an inert filler selected from the group consisting of aluminum oxide, aluminum sulphate, barium sulphate, calcium carbonate, magnesium carbonate, silicates, such as aluminum silicate (kaolin clay) and magnesium silicate (talc), silicon dioxide, various clays, diatomaceous earth, titanium dioxide, zeolites, gypsum, pulp powder, wood powder, cellulose derivates, polymeric particles.

In one embodiment of the present invention, the peel force promoter is CaCO₃.

A key factor of the present invention is that said microporous layer is free of any adhesive coating and is selected from the group consisting of spunbonded polyolefins and/or paper.

An additional feature of the present invention is that the core layer is selected from the group consisting of a homogeneously and/or heterogeneously branched polyethylene mixture having a density between 0.880-0.930 g/cm³.

Another feature of the present invention is that the bottom layer is selected from the group consisting of polyolefins, PA, PS, PET, PETG, PVC, EVOH, and their copolymers.

A supplementary feature of the present invention is that the pressure activated seal of said combination is generally adjacent to a peripheral edge of the packaging.

Another key factor of the present invention is that the seal window is higher than 10°C, and preferably higher than 15°C for peel forces higher than 1N/cm, but lower than 2.5N/cm.

Furthermore, the present invention discloses a preparation process of a peel seal combination as in any of the previous claims characterised in that the peelable top layer is coextruded, extrusion coated or laminated on a core and/or a bottom layer.

Additionally, a preparation process of a peel seal combination is disclosed wherein said peel seal combination is adhered to said microporous layer by a heat and pressure activated seal.

Finally, the invention discloses the use of a peel seal combination as in any of the previous claims in sterilisable applications such as packs, trays or pouches.

### Short description of the figures

Fig.1 represents reference peel seal curves of the prior art with sealants of 24% EVA (A) and 19% EVA (B) against uncoated Tyvek 2FS; coated Tyvek 2FS against LDPE (C) .

Fig.2 represents peel seal curves: sealant homogeneously branched ρ= 0.882 plastomer against uncoated Tyvek 2FS (D) and coated Tyvek 2FS against LDPE (C).

Fig.3 represents peel seal curves with sealant of homogeneously branched ρ= 0.882 plastomer against uncoated Tyvek 2FS (D); sealant homogeneously branched ρ= 0.882 plastomer/CaCO3 (70/30) against uncoated Tyvek 2FS (E); coated Tyvek 2FS against LDPE (C).

Fig.4 represents peel seal curves with sealant of homogeneously branched ρ= 0.882 plastomer/talcum (75/25) against uncoated Tyvek 2FS (F); sealant homogeneously branched ρ= 0.882 plastomer/CaCO3 (75/25) against uncoated Tyvek 2FS (G); coated Tyvek 2FS against LDPE (C).

Fig.5 represents the concentration effect of the peel force promoter on the peel force of homogeneously branched ρ= 0.882 plastomer against uncoated Tyvek 2FS.

Fig.6 Drawing of a peel-seal combination of the present invention on a microporous layer
**1:** microporous and breathable material,
**2:** non-breathable multi-layer thermoplastic film,
**3:** sealed interface between the non-woven and the thermoplastic film,
**4:** uncoated microporous and breathable material,
**5:** peelable top layer,
**6:** core layer,
**7:** bottom layer.

### Remarks:

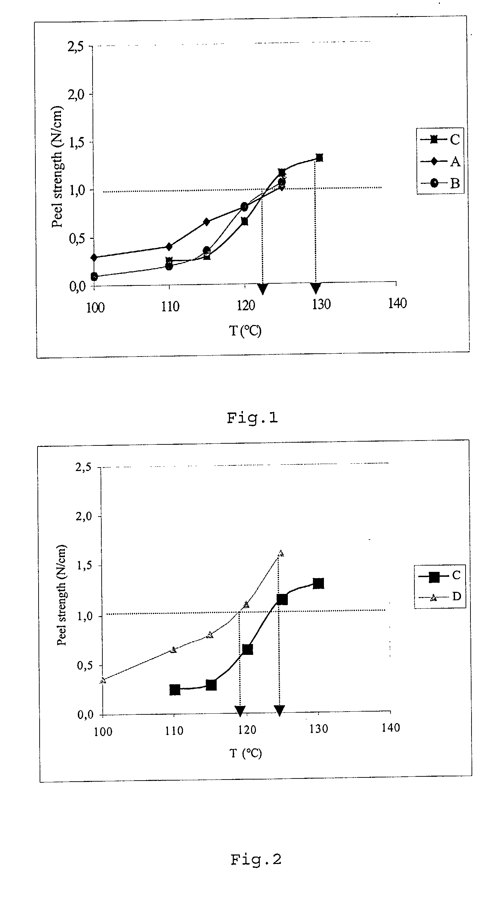

- The core layer and the bottom layer may not be present and in one of the preferred embodiments of the present invention, the peelable top layer is than a unique thermoplastic seal layer sealed to the microporous layer.
- The arrows in the figures 1, 2, 3 and 4 represent the lower and upper temperature limit of the seal window.

### Detailed description of the invention

The present invention is based on a particular combination of low temperature sealing polyolefines, of the same chemical nature as the spunbond polyolefin, combined with a peel force promoter providing a solution for direct sealing and peeling against spunbonded polyolefin, such as for example Tyvek, without any coating or heat pretreatement as performed in US 4,125,985.

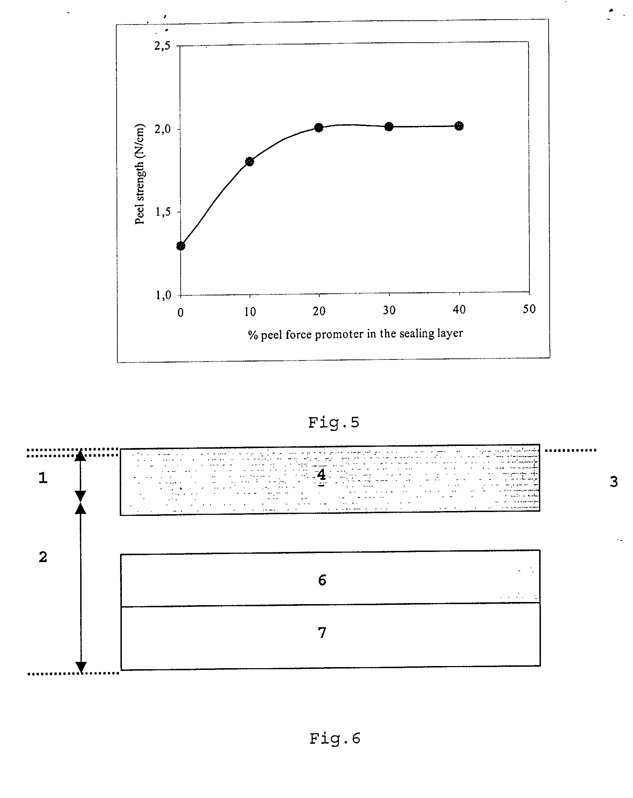

The disclosed solution is based on a mono or a multi-layer coextruded and/or laminated film containing at least one sealable top layer, which is the unique seal layer in the case of a monolayer, at least one core layer and a bottom layer in the case of coextruded multilayers. The sealable top layer provides easy peel against spunbonded polyolefin as shown in figure 5.

The sealable top layer consists of a blend mixture containing low temperature melting polyolefine plastomers, a peel force promoter and processing aids. The low temperature melting polyolefine plastomers in the blend are chemically similar to the uncoated spunbond polyolefin. As a result no polarity problems occur during the joining of both substrates and low temperature sealing is favoured.

Polyolefin plastomers are defined in this text as ethylene alpha-olefin copolymer of a C4 to C8, or a higher olefin, having a density of about 0.865 g/cm3 to about 0:910 g/cm3 and a melt index of about 0.5 to 35 dg/min. Polymerisation of this materials is described in for instance EP 0 461 815, U.S. 5,278,272, U.S. 5,278,236, EP 0 273 654, and EP 0 608 903.

Essential for the application is that these materials have great softness and high amorphousness, in addition to a high degree of purity. They are substantially free of migrating oligomers which represents a major advantage especially for FDA sensitive matters.

Some people skilled in the art uses the expression very low density polyethylene (VLDPE) sometimes called ultra low density polyethylene (ULDPE), for substantially linear polyethylenes having densities below about 0.915 g/cm3 and, possibly as low as 0.86 g/, and having a melting point as low as 90°C. This expression does not include ethylene alpha olefin copolymers of densities below about 0.90 g/cm3 with elastomeric properties and referred to elastomers. Some elastomers are also referred by at least one manufacturer as "ethylene alpha olefin plastomers", but other manufacturers have characterised VLDPE as an ethylene-alpha-olefin with plastomeric properties. However, as hereinafter explained, ethylene alpha-olefin elastomers or plastomers may be advantageously used in the practice of this invention as a constituent in certain layers of this multilayer film. VLDPE does not include linear low density polyethylenes (LLDPE) which have densities in the range of 0.915-0.930 g/cm3, but it is contemplated that LLDPE may optionally be blended into one or more of the layers. VLDPE comprises copolymers (including terpolymers) of ethylene with alpha-olefins, usually 1-butene, 1-hexene or 1-octene, and in some instances terpolymers, as for example of ethylene, 1-butene and 1-hexene.

At least one polyolefine in the polyolefine mixture of the peelable top layer belongs to the group of homogeneously branched polyolefines produced by single-site constrained geometry or metallocene catalysts, referring to plastomers.

The other minor polyolefine components (0-30%) present in the peelable top layer in the blend mixture is selected from the group of homogeneously and heterogeneously branched polyethylene types: ULDPE, VLDPE, LDPE, LLDPE and MDPE.

The blend mixture is produced on conventional extrusion equipment with sufficient homogenising capabilities: single screw extrusion, single screw extrusion with mixing devices, twin-screw extrusion and the like.

The sealable top layer can represent until 70% of the total mass of the multilayer film and can sometimes be used as the unique layer without any additional core or bottom layer.

Significant increases in peel forces are obtained with a peel force promoter which facilitates the diffusion of the heat trough the film without the creation of fibre tear. The sealant promoter is an inorganic filler which lowers the seal initiation temperature, which consequently increases the peel force, and broadens the peel-seal window against uncoated spunbonded polyolefin.

This is the surprising totally unexpected effect of the present invention, while the prior art uses the same kind of fillers to decrease the peel force of alpha-olefin polymers, this invention uses those fillers as peel force promoters in combination with plastomers.

The concentration ratio of the peel force promoter ranges from 5-50% by weight of the peelable top layer (see Fig.5) and the type of filler, its concentration and particle size, conditiones the obtained peel force, the uniformity and whiteness or colorness of the peel trace and provides evidence of good initial seal integrity.

In the present invention, fillers are defined as particles and/or other forms of materials which can be added to the film polymer extrusion blend and which will not chemically interfere with or adversely affect the extruded film. They can be uniformly dispersed throughout the peelable top layer and are incompatible with the polyolefine phase. With incompatibility is meant that the filler exits as separate particles, or as a separate phase, in the sealing layer.

Generally the filler will be in particle form with average particle sizes in the range of about 0.1 to about 10 microns, preferably from about 0.1 to about 4 microns. Both organic and inorganic fillers are contemplated for use with the present invention provided they do not interfere with the film forming process and/or subsequent laminating processes. Examples of fillers include aluminum oxide, aluminum sulphate, barium sulphate, calcium carbonate, magnesium carbonate, silicates, such as aluminum silicate (kaolin clay) and magnesium silicate (talc), silicon dioxide, various clays, diatomaceous earth, titanium dioxide, zeolites, gypsum, pulp powder, wood powder, cellulose derivates, polymeric particles. The filler particles may optionally be coated with a fatty acid, such as stearic acid or behenic acid, and/or other material in order to facilitate the free flow of the particles (in bulk) and their ease of dispersion into the polymer.

Furthermore, at least one core layer can be added, containing a homogeneously and/or heterogeneously branched polyethylene mixture having a density between 0.880-0.930 g/cm³.

Additionally, a coextruded bottom layer can be included to provide deep-draw properties, stiffness and mechanical resistance against puncture, tear or impact. No limitative examples of such layers are Polyolefins, PA, PS, PETG, PVC, EVOH, and their copolymers.

The film is extruded on conventional cast and blown coextrusion equipment, including extrusion coating and extrusion lamination lines; using processing aids such as anti-oxidants, slip, anti-block agents well known by those skilled in the art.

### Description of a preferred embodiment of the invention

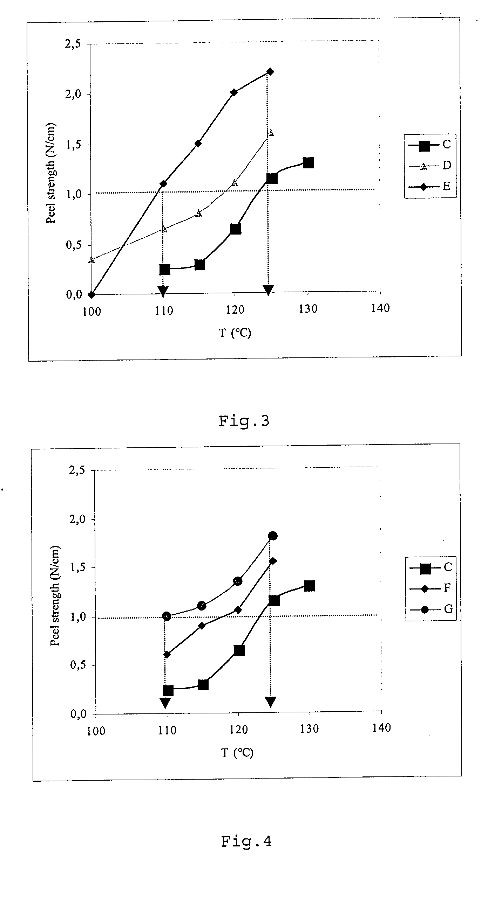

The different figures of the present inventions clearly shows the situation of the prior art (Fig.1) and those improved by the presence of a peel force promoter according to the present invention. (Figs.3, 4 and 5).

The sealing data are obtained with a Kopp sealing equipment. The upper jaw is heated and in contact with the spunbonded polyolefin. The lower jaw contains a 60 shore A rubber at room temperature. The pressure is maintained at 2 bar for a dwell time of 1 sec. During sealing several extruded films were sandwiched between Tyvek® 2FS (DuPont), on top, and a PE/OPET (40/12) support layer. The peel data reported correspond to a 90° peel angle. Temperature increment was 5°C. The peel seal data are only reported for temperatures where no fibre tear occurred. The peel seal window, indicated by arrows in the different figures, corresponds to the temperature interval where the peel forces are higher than 1N/cm in the absence of fibre tear, are indicated in the figures.

The major part of the polymers of the peelable top layer are plastomers. No limitative examples of these materials used in the present invention are : Dow Affinity EG 8100 (ρ=0.868 g/cm³, MI=0.5 dg/min), Exxon/DSM Exact 8210 (ρ=0.882 g/cm³, MI=10 dg/min), Exxon/DSM Exact 0201 (ρ=0.902 g/cm³, MI=1 dg/min), Exxon/DSM Exact 0210 (ρ=0.902 g/cm³, MI=10 dg/min), Dow Affinity PL 1840 (ρ=0.910 g/cm³, MI=1.0 dg/min), Dow Affinity PL 1845 (ρ=0.910 g/cm³, MI=3 dg/min) or combinations thereof.

The minor part (0-30%)of the polymers which can be added to the plastomers of the peelable top layer are selected from the group consisting of homogeneously and heterogeneously branched polyethylene types such as ULDPE, VLDPE, LDPE, LLDPE and MDPE. No limitative examples of such polyolefines used in the present invention are Tafmer A-4085 (Mitsui, ρ=0.885 g/cm³, MI=3.6 dg/min), Attane SC 4104 (Dow, ρ=0.904 g/cm³, MI=4.0 dg/min), Exceed ML 1018 FB (Exxon, ρ=0.918 g/cm³, MI=4.0 dg/min), Stamylex 1046 F (DSM, ρ=0.917 g/cm³, MI=4.4 dg/min), Lupolen 3020H (Basell, ρ=0.927 g/cm³, MI=2.0 dg/min), Lacqtene 1020FH30 (Atofina, ρ=0.930 g/cm³, MI=2.0 dg/min) or combinations thereof.

No limitative examples of peel force promoters based on polyethylene matrix filler systems used in the present invention in the peelable top layer in concentrations between 5 to 50% can be selected from the following types. Ampacet 10799A (50% talcum), Ampacet 10847 (70% CaCO₃), Schulman IR1515 (50% silicate), Schulman IR1616 (50% clay).

## Claims

1. A peel-seal combination comprising a microporous layer (1) adhering to a thermoplastic film (2) comprising at least a peelable top layer (5) and optionally a core (6) and/or a bottom layer (7) **characterised in that**:
- said peelable top layer (5) comprises 5-50%, preferably 10 - 30% of a peel force promoter,
- 50-95% of a polyolefin plastomer with a density between 0.86 and 0.91 g/cc, and
- 0-30% of an alpha-polyolefin polymer selected from the group consisting of homogeneously and heterogeneously branched polyethylene types such as ULDPE, VLDPE, LDPE, LLDPE and MDPE.

2. Peel-seal combination as in claim 1, **characterised in that** said peel force promoter is an inert filler selected from the group consisting of aluminum oxide, aluminum sulphate, barium sulphate, calcium carbonate, magnesium carbonate, silicates, such as aluminum silicate (kaolin clay) and magnesium silicate (talc), silicon dioxide, various clays, diatomaceous earth, titanium dioxide, zeolites, gypsum, pulp powder, wood powder, cellulose derivates, polymeric particles.

3. Peel-seal combination as in claim 1, **characterised in that** the peel force promoter is CaCO₃.

4. Peel-seal combination as in claim 1, **characterised in that** said microporous layer is free of any adhesive coating and is selected from the group consisting of spunbonded polyolefins and/or paper.

5. Peel-seal combination as in claim 1, **characterised in that** the core layer is selected from the group consisting of a homogeneously and/or heterogeneously branched polyethylene mixture having a density between 0.880-0.930 g/cm³.

6. Peel-seal combination as in claim 1, **characterised in that** the bottom layer is selected from the group consisting of polyolefins, PA, PS, PET, PETG, PVC, EVOH, and their copolymers.

7. Peel-seal combination as in claim 1, **characterised in that** the pressure activated seal of said combination is generally adjacent to a peripheral edge of the packaging.

8. Peel seal combination as in any of the previous claims, **characterised in that** the seal window is higher than 10°C, and preferably higher than 15°C for peel forces higher than 1N/cm, but lower than 2.5N/cm.

9. Preparation process of a peel seal combination as in any of the previous claims **characterised in that** the peelable top layer is coextruded, extrusion coated or laminated on a core and/or a bottom layer.

10. Preparation process of a peel seal combination as in any of the previous claims **characterised in that** said peel seal combination is adhered to said microporous layer by a heat and pressure activated seal.

11. Use of a peel seal combination as in any of the previous claims in sterilisable applications such as packs, trays or pouches.
